# EUROPEAN PATENT APPLICATION

(11) **EP 4 282 492 A1**
(43) Date of publication of application: **29.11.2023**
(21) Application number: 22175504.4
(22) Date of filing: 25.05.2022
(51) Int. Cl.: A62C 2/12, F16L 5/04, F24F 13/14, F24F 11/33, F16L 55/10, F16L 57/04

(54) **FIRE DAMPER WITH INSULATED HOUSING PART**

(71) Applicant: Rf-Technologies, 9860 Oosterzele (BE)
(72) Inventor: VANDENHEEDE, Pascal, 9750 Kruisem (BE); DE CONINCK, Willem, 9860 Oosterzele (BE); STEENLAND, Mathieu, 1703 Schepdaal (BE)
(74) Representative: BiiP cvba

(57) **Abstract**

A fire damper comprising a housing defining a channel having a proximal end and a distal end, a fire valve mounted in said housing configured to close-off the channel when in a closed position, characterized in that an insulation layer is provided surrounding the housing in proximity of the valve and extending a distance towards the proximal end of the housing.

## Description

### Field of the Invention

The present invention concerns a fire damper comprising a housing defining a channel having a proximal end and a distal end, a fire valve mounted in said housing configured to close-off the channel when in a closed position.

### Background to the Invention

Fire dampers' main function is stopping the spread of a fire through ventilation shafts or other service openings in a building and to stop the spreading of smoke. Further fire dampers are required to limit the heat transfer through a service opening in a wall to prevent ignition of materials at the side of the fire damper facing away a fire. Generally, fire dampers comprise an aluminum or steel housing wherein a fire valve is provided. For fire dampers of a type configured to be build-in in a wall opening with the fire damper located substantially in the center of the width of the wall, the distance between the fire valve and the part of the fire damper protruding from the wall is usually large enough to dissipate heat and prevent the housing to reach a temperature high enough to create an acute danger, the heat transfer through the housing can thereby be further limited by providing a section with overlapping punches in the housing, creating a labyrinth of material limiting the flux of heat through the housing in the longitudinal direction of the housing.

In case of a fire damper of the type that is mounted against a wall at one side thereof, a distal end of the housing extends through the wall opening and the proximal end extends from the valve into the room wherein the fire valve is positioned. When in such case a fire rages at the distal end of the fire damper, the heat of the fire reaches up to the fire valve and thus very close to the proximal end of the damper housing. A consequence is that the housing, directly proximal of the fire valve, risks to heat up to temperatures that incur a high danger of ignition of materials in proximity of the fire damper. Punching of the housing can not prevent this excessive heating as there is simply no place.

A same risk of ignition occurs with fire dampers wherein the valve is positioned between outer surfaces of a rather narrow wall, where the distance between the valve - and thus the location at which a fire or heat is to be stopped - and the opposing wall surface is small.

### Summary of the Invention

The present invention addresses the above problem of existing fire dampers and provides for an easy to implement and economical solution.

The present invention concerns a fire damper comprising a housing defining a channel having a proximal end and a distal end, a fire valve mounted in said housing configured to close-off the channel when in a closed position, characterized in that an insulation layer is provided surrounding the housing in proximity of the valve and extending a distance towards the proximal end of the housing.

The insulation layer is thereby preferably fixed to the housing by an adhesive.

According to a preferred embodiment, the insulation layer when applied to the housing, defines air pockets.

The insulation layer may be made from a fibrous material, preferably comprising cellulose fibers, more preferably the insulation layer comprises cardboard, such as corrugated cardboard, most preferably single-face laminated corrugated cardboard having a fluted layer adhered to a single linerboard. According to a preferred embodiment, the insulation layer is applied on the housing of the fire damper with its fluted layer contacting the housing and the single linerboard facing away the housing.

The adhesive is preferably a sodium metasilicate based glue (soluble glass glue), that in case the insulation layer is made of a single-face laminated corrugated cardboard, is applied to the flutes thereof.

### Brief Description of the Appended Figures

Figure 1 is a perspective view of a fire damper according to the present invention;
Figure 2 shows a partial side view of the fire damper of Fig. 1;
Figure 3 shows a cross-section of the housing according to line E-E in Figure 2;
Figure 4 schematically illustrates some examples of potential insulation layers of a fire damper according to the present invention;

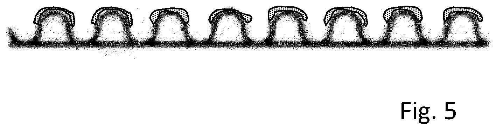

Figure 5 schematically illustrates a method step of applying the insulation layer to a fire damper.

### Detailed Description of a Preferred Embodiment

For the sake of the present invention a fire damper is defined as a passive fire protection product configured to prevent the spread of fire and/or smoke inside ductwork through fire-resistance rated walls and floors. In use, fire dampers of the present invention are mounted in service openings through fire-resistance rated walls or floors and optionally coupled to ductwork of heating, ventilation, or air conditioning systems.

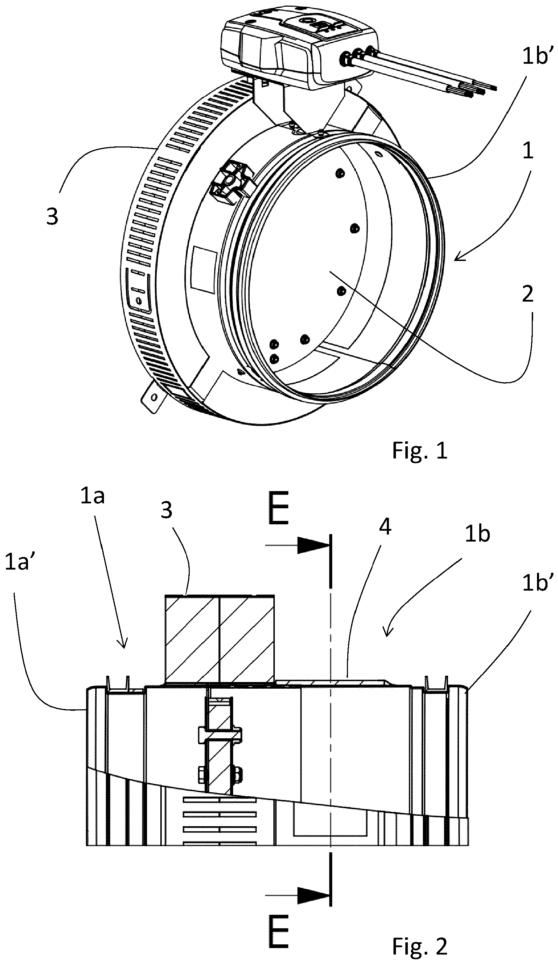

Figures 1 and 2 show a fire damper according to the present invention comprising a housing 1 that defines a longitudinal channel wherein a fire valve 2 is mounted. The fire valve is configured to be movable between an open position, wherein an air flow through the channel is admitted and a closed position wherein it closes-off passage through the channel. In a closed position the fire valve divides the housing in a distal part 1a comprising a distal end 1a' and a proximal part 1b comprising a proximal end 1b' of the housing. This division of the channel in a distal part and a proximal part will be used in the following description for both open and closed positions of the valve, thereby indicating the same physical parts of the housing irrespective of the valve being in an open or a closed position.

The illustrated fire damper further comprises a collar 3 surrounding the valve in a position colinear with the position of the fire valve 2 when in a closed position, whereby the collar comprises a distal surface extending in a plane axial to the longitudinal direction of the housing and facing the distal part of the housing. This distal surface is configured to abut a wall surface of the wall part surrounding a service opening. The distal part of the housing thereby extends in or even through the concerned wall, whereas the proximal part of the housing extends into the room delimited by the mentioned wall surface.

In the enclosed figures, the housing has a circular cross-section, this is however pure illustrative and does not exclude fire dampers with a rectangular cross-section.

According to the present invention an insulation layer 4 is provided surrounding the housing at one side of a collar 3 facing the proximal end of the housing. The insulation layer is preferably made of a fibrous material, more preferably comprising cellulose fibers such as paper or cardboard. The insulation layer preferably covers a longitudinal section of the housing over a length of at least 2,5 cm, preferably at least 5 cm measured from the collar towards the proximal end of the housing and this preferably over the entire circumference of the housing in that longitudinal section.

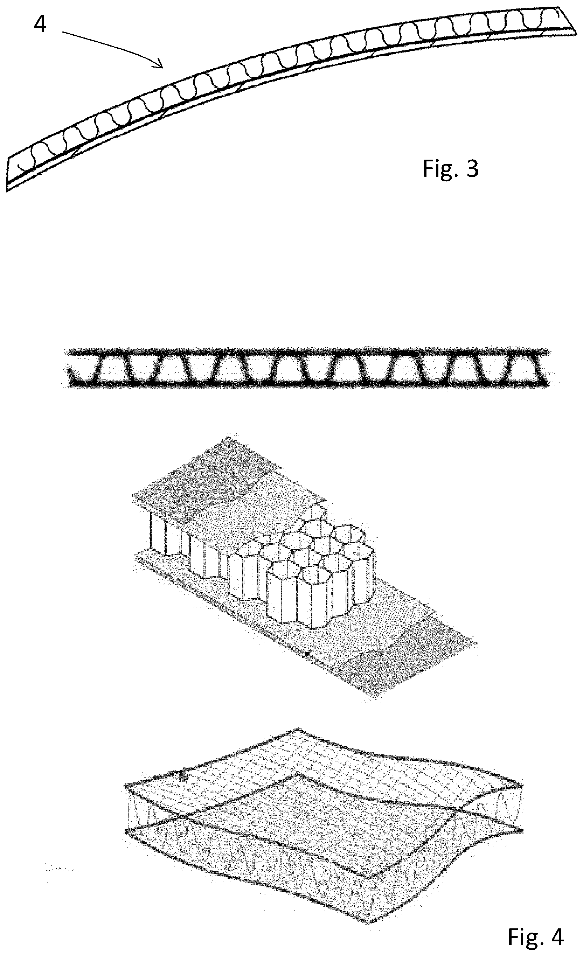

As illustrated in figure 3, the insulation layer has a cross-sectional design that allows for the creation of air pockets in the insulation layer when applied on the housing. In this case and as showed in Figure 3 the insulation layer is a single-face laminated corrugated cardboard having a fluted layer adhered to a single linerboard, with air pockets defined between the fluted layer and the single liner board and with air pockets defined between the fluted layer and the housing. However, this single-face laminated corrugated cardboard is only one example of a suitable cross-sectional design that can be used for an insulation layer in a fire damper of the present invention.

Other suitable cross-sectional designs are shown in Figure 4 and include, amongst others: double-face laminated corrugated cardboard having a fluted layer sandwiched between to linerboards, or a laminate of a linerboard with a honeycomb layer, or a textile cloth,.....

The insulation layer is preferably fixed to the housing by means of an adhesive, in particular an adhesive that increases the ignition temperature of the insulation layer. An example of such an adhesive is a sodium metasilicate based glue (water glass) that is inherently intumescent.

For the application of the insulation layer on the housing, it is preferred to provide the insulation layer as a sheet and to apply the adhesive to a surface of the insulation layer that is to be adhered to the housing. Application of the adhesive can be done by an application roller to obtain a good coverage of the adhesive on the insulation layer, after which the insulation layer is applied on the housing.

As illustrated in Figure 4, where the insulation layer is a single-face laminated corrugated cardboard, it is preferred that the adhesive is applied to flutes of the insulation layer and this most preferably not only to the very apex of the flutes but also to part of the flutes extending in to that apex to increase fire resistance of the cardboard.

Although described on basis of an illustration of a fire damper of a type that is mounted against a wall at one side thereof, a distal end of the housing extends through the wall opening and the proximal end extends from the valve into the room wherein the fire valve is positioned, the present invention also concerns fire dampers of a type wherein the valve is positioned in proximity of the center of a wall in the depth direction. In that case there in not necessarily a collar, as any gap between the wall material and the housing can be filled with intumescent material. In such case, the insulation layer extends at one side of the wall towards the corresponding distal or proximal end of the housing. Optionally, the insulation layer may extend towards both the proximal and distal end of the housing or two separate insulation layers can be provided. One extending towards the proximal end of the housing and one extending towards the distal end of the housing.

## Claims

1. A fire damper comprising a housing defining a channel having a proximal end and a distal end, a fire valve mounted in said housing configured to close-off the channel when in a closed position, **characterized in that** an insulation layer is provided surrounding the housing in proximity of the valve and extending a distance towards the proximal end of the housing.

2. The fire damper according to claim 1, wherein the insulation layer is fixed to the housing by an adhesive.

3. The fire damper according to claim 1, the insulation layer when fixed to the housing defining air pockets.

4. The fire damper according to any of the preceding claims, wherein the insulation layer is made from a fibrous material, preferably comprising cellulose fibers.

5. The fire damper according to claim 4, wherein the insulation layer comprises cardboard.

6. The fire damper according to claim 4 or 5, wherein the insulation layer comprises corrugated cardboard, preferably single-face laminated corrugated cardboard having a fluted layer adhered to a single linerboard.

7. The fire damper according to claim 6, wherein the insulation layer is applied on the housing of the fire damper with its fluted layer contacting the housing and the single linerboard facing away the housing.

8. The fire damper according to any of claims 2 to 7, wherein the adhesive is a sodium metasilicate based glue.

9. The fire damper according to claims 2 and 6 or 7, wherein the adhesive is applied to the flutes of the single-face laminated corrugated cardboard.

10. The fire damper according to any of the preceding claims, comprising a collar surrounding the housing colinear with the valve when in the closed position, wherein the insulation layer is provided surrounding the housing in proximity of the valve and extending of a distance towards the proximal end of the housing.

11. The fire damper according to claim 10, wherein the distal end of the housing is configured to extend through an opening in a wall and the collar is designed to be placed and fixed to a face of a wall and the proximal end comprises a coupler for coupling the housing with a ventilation shaft.

12. The fire damper according to any of the preceding claims 11 or 12, wherein the insulation layer extends in a longitudinal direction of the housing from the collar towards the proximal end of the housing over a distance of at least 2,5 cm, preferably at least 5 cm.

13. The fire damper according to any of the preceding claims, wherein the channel has a round or rectangular cross section.

14. The fire damper according to any of the preceding claims, wherein the fire valve is of a type comprised in the group of: butterfly valves, pivoting valves, roller-shutter valves.
